# EUROPÄISCHE PATENTSCHRIFT

(11) **EP 1 561 575 B1**
(45) Veröffentlichungstag und Bekanntmachung des Hinweises auf die Patenterteilung: **13.09.2006**
(21) Anmeldenummer: 05001279.8
(22) Anmeldetag: 22.01.2005
(51) Int. Cl.: B32B 27/40, B32B 15/08, B32B 5/18

(54) **Verbundelemente aus PUR-Werkstoffen mit Oberflächen aus Thermoplast- oder Metallschichten und ein Verfahren zu ihrer Herstellung**
Composite parts of Polyurethene with Thermoplastic or Metal Surface Layers and a Process for their Production
Eléments composites de polyuréthane avec une couche de surface de métal ou de thermoplastique et procédé pour leur préparation

(30) Priorität: 03.02.2004 DE 102004005223
(43) Veröffentlichungstag der Anmeldung: 10.08.2005
(73) Patentinhaber: Bayer MaterialScience AG, 51368 Leverkusen (DE)
(72) Erfinder: Haas, Peter, Dr., 42781 Haan (DE); Wegener, Dirk, Dr., 40789 Monheim (DE); Paul, Reiner, Dr., 42799 Leichlingen (DE); Mies, Detlef, 50189 Elsdorf (DE)

(56) Entgegenhaltungen:
- EP-A- 0 262 378
- EP-A- 0 513 964
- EP-A- 0 563 918
- EP-A- 0 634 433
- EP-A- 0 995 667
- EP-A- 1 077 225
- EP-A- 1 319 503
- EP-A- 1 431 322
- WO-A-00/53652
- WO-A-99/16602
- DE-A1- 3 411 216
- DE-A1- 10 160 374
- US-A- 5 158 607

## Beschreibung

Die Erfindung betrifft Verbundelemente, aufgebaut aus einer Aussenschicht (i) und einem faserverstärkten Polyurethanschaumstoff mit Selbsttrennadditiven (nachfolgend als PUR bezeichnet) als Trägerschicht (ii) sowie gegebenenfalls einer Innenschicht (iii), ein Verfahren zu deren Herstellung sowie deren Verwendung als Karosseriebauteile.

EP-A-995 667 und EP-A-1 077 225 beinhaltet die Herstellung von Verbundbauteilen, aufgebaut aus einer pigmentierten, thermoplastischen Folie, die mit glasfaserverstärktem PUR hinterschäumt ist. Zur Herstellung der gefärbten Bauteile wird Trennmittel für die Entformung aus dem Modulwerkzeug verwendet. Die Verbundbauteile werden beispielsweise als Dachmodule in Kraftfahrzeuge eingesetzt.

Des Weiteren beschreibt DE-A 10 160 374 ein Verbundteil mit Langglasfaserverstärkung, hergestellt nach dem LFI-PUR-Verfahren. Zur problemlosen Teilentformung aus der Modulform muss auch hier Trennmittel auf die Formenoberfläche aufgetragen werden.

Aus Gründen einer schnellen, produktiven Fertigung ohne zusätzliches Aufsprühen, Ablüften und Trocknen des Trennmittels im Werkzeug sowie einer anschliessenden Entfernung desselben von den Verbundteiloberflächen vor Kaschierung oder Verklebung dieser Bauteile ist ein Verzicht auf diesen Trennmitteleinsatz wünschenswert.

Aufgabe der Erfindung war es daher, Verbundelemente mit hohen mechanischen Eigenschaften und mit guten Oberflächenqualitäten, aufgebaut aus einer Aussenschicht (i) und einer ihr anhaftenden Trägerschicht aus faserverstärktem PUR (ii) und gegebenenfalls eines dieser Trägerschicht anhaftenden Dekors als Innenschicht (iii) so herzustellen, dass während der laufenden Produktion auf externes Trennmittel verzichtet werden kann.

Es wurde nun gefunden, dass bei Verwendung von bestimmten PUR-Formulierungen, die mit spezifischen Selbsttrennadditiven versehen sind, sowohl ein sehr gutes Trennverhalten aus den Modulwerkzeugen als auch eine sehr gute adhäsive Haftung zu allen Verbundschichten (i), (ii) und (iii) und auch zusätzlich zu vorhandenen Befestigungs- und Verstärkungselementen erreicht werden kann.

Gegenstand der Erfindung sind somit Verbundelemente, aufgebaut aus einer gegebenenfalls vorgeformten Aussenschicht (i) aus thermoplastischen Kunststoffen oder Metall, einer ihr anhaftenden Trägerschicht (ii) aus faserverstärktem PUR-Material und gegebenenfalls eines dieser Trägerschicht partiell anhaftenden Dekors als Innenschicht (iii), dadurch gekennzeichnet, dass das faserverstärkte PUR-Material Selbsttrennadditive aus
A) Polykondensaten aus Carbonsäuren mit einer Kettenlänge von 8 bis 40 Kohlenstoffatomen, gegebenenfalls in Abmischung mit Dicarbonsäuren und mehrwertigen Alkoholen,
B) gegebenenfalls Carbonsäuren mit einer Kettenlänge von 8 bis 40 Kohlenstoffatomen,
C) gegebenenfalls Ammoniumsalzen aus Carbonsäuren mit einer Kettenlänge von 8 bis 40 Kohlenstoffatomen und Diaminen mit mindestens einer primären Aminogruppe und mindestens einer tertiären Aminogruppe
enthält.

Ferner ist Gegenstand der Erfindung ein Verfahren zur Herstellung von Verbundelementen, aufgebaut aus einer Aussenchicht (i), einem faserverstärkten PUR-Material als Trägerschicht (ii), und gegebenenfalls einem Dekor als Innenschicht (iii), wobei Haftung zwischen den Schichten (i), (ii) und ggf. (iii) vorliegt, umfassend die Schritte:
1. Einbringen der Außenschicht (i) in die Unterschale einer Form,
2. gegebenenfalls Einbringen eines Dekormaterials als Innenschicht (iii) in die Oberschale der Form,
3. gegebenenfalls Aufbringen einer Fasermattenverstärkung auf die Außenschicht (i) oder gegebenenfalls in die Oberschale der Form,
4. Auftragen des PUR-Materials auf die Außenschicht (i) bzw. auf die Fasermattenverstärkung,
   wobei dieses Material die PUR-Komponenten
   a) Polyisocyanat,
   b) gegenüber Isocyanat reaktiven Verbindungen,
   c) gegebenenfalls Verstärkungsstoffe,
   d) Katalysatoren,
   e) Treibmittel,
   f) gegebenenfalls Zusatzstoffe und/oder Hilfsmittel und
   g) Selbsttrennadditive,
   bestehend aus
   A) Polykondensaten aus Carbonsäuren mit einer Kettenlänge von 8 bis 40 Kohlenstoffatomen, gegebenenfalls in Abmischung mit Dicarbonsäuren und mehrwertigen Alkoholen,
   B) gegebenenfalls Carbonsäuren mit einer Kettenlänge von 8 bis 40 Kohlenstoffatomen,
   C) gegebenenfalls Ammoniumsalzen aus Carbonsäuren mit einer Kettenlänge von 8 bis 40 Kohlenstoffatomen und Diaminen mit mindestens einer primären Aminogruppe und mindestens einer tertiären Aminogruppe
   enthält,
   oder
5. gleichzeitiges Aufbringen von Verstärkungsstoffen und PUR-Material auf die Außenschicht (i), alternativ zu Schritt 4.,
6. Ausreagieren des PUR-Materials in der Form,
7. Entnahme des PUR-Verbundelementes aus der Form,
8. gegebenenfalls Aufbringen eines Dekormaterials (iii) auf die Seite des PUR-Verbundelementes, die der Seite, auf der sich die Außenschicht (i) befindet, gegenüberliegt, alternativ zu Schritt 2.

Schließlich ist Gegenstand der Erfindung die Verwendung der vorstehend beschriebenen Verbundelemente als Karosseriebauteile für Kraftfahrzeuge, insbesondere für Dächer, Hardtops, Türen, Motorhauben, Kofferraumdeckel, Heckklappen und Stoßfänger.

Die erfindungsgemäßen Verbundteile bestehen aus einer Aussenschicht (i), einer Trägerschicht (ii) und gegebenenfalls einer Innenschicht (iii).

Als Außenschicht (i) haben sich thermoplastische Kunststoffe oder Metallfolien bzw. -bleche, die sich tiefziehen oder verformen lassen, als geeignet erwiesen.

Die kommerziell erhältlichen thermoplastischen Kunststoffe sind beispielsweise auf Basis von Acrylnitril-Butadien-Styrol (ABS), Polymethylmethacrylat (PMMA), Acrylnitril-Styrol-Acrylester (ASA), Polycarbonat (PC), Polycarbonat und Acrylnitril-Butadien-Styrol Blend (PC-ABS), Polycarbonat und Acrylnitril-Styrol-Acrylester Blend (PC-ASA), thermoplastischem Polyurethan (TPU), Polypropylen (PP), Polyethylen (PE) oder Polyvinylchlorid (PVC) aufgebaut und anwendungsbedingt bevorzugt aus mindestens zwei, gegebenenfalls drei Schichten unterschiedlicher Thermoplastmaterialien zusammengesetzt.

Die Metallfolien oder -bleche bestehen im Allgemeinen aus Metallen und Metalllegierungen, die sich tiefziehen oder verformen lassen. Bevorzugt ist hier Aluminium.

Die Außenschichten (i) weisen üblicherweise Dicken von 0,1 bis 5 mm auf, bevorzugt von 0,6 bis 2 mm.

Die Trägerschicht (ii) aus faserverstärktem PUR schließt sich haftend an die Aussenschicht (i) an. In den erfindungsgemäßen Verbundelementen handelt es sich hierbei um einen PUR-Schaumstoff mit Selbsttrennadditiven. Dieser selbsttrennende PUR-Schaumstoff ist durch Umsetzung der Aufbaukomponenten a) bis g) erhältlich.

Als Isocyanate (a) können allgemein bekannte (cyclo)aliphatische und/oder insbesondere aromatische Polyisocyanate eingesetzt werden. Besonders eignen sich aromatische Diisocyanate, vorzugsweise Diphenylmethandiisocyanat (MDI) und Toluylendiisocyanat (TDI). Die Isocyanate können in Form der reinen Verbindung oder in modifizierter Form, beispielsweise in Form von Urethdionen, Isocyanuraten, Allophanaten oder Biurethen, vorzugsweise in Form von Urethan- uns Isocyanatgruppen enthaltenden Umsetzungsprodukten, sogenannten Isocyanat-Prepolymeren, eingesetzt werden.

Als gegenüber Isocyanaten reaktive Verbindungen (b) werden üblicherweise Polyole wie Polyetherole und/oder Polyesterole verwendet. Bevorzugt sind Polyetherpolyalkohole mit einer Funktionalität von 1,9 bis 8,0 und einer Hydroxylzahl von 50 bis 1 000 mg KOH/g sowie gegebenenfalls 10 bis 100 % primären Hydroxylgruppen. Derartige Polyetherpolyole sind allgemein bekannt, kommerziell erhältlich und basieren beispielsweise auf üblichen Starterverbindungen, die mit üblichen Alkylenoxiden, beispielsweise Propylenoxid und/oder Ethylenoxid unter allgemein bekannten Bedingungen umgesetzt werden. Der Gehalt an primären Hydroylgruppen kann erreicht werden, indem man die Polyole zum Abschluss mit Ethylenoxid umsetzt. Diese Verbindungen (b) können gegebenenfalls in Mischung mit weiteren bekannten gegenüber Isocyanaten reaktiven Verbindungen, beispielsweise üblichen Polyolen, die auf Polycarbonatdiolen basieren, eingesetzt werden.

Die Verbindungen (b) können in Mischung mit Kettenverlängerungs- und Vernetzungsmitteln verwendet werden. Bei den Kettenverlängerungsmitteln handelt es sich überwiegend um 2-funktionelle Alkohole mit Molekulargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargwichten von 60 bis 499 und 3 oder mehr aktiven H-Atomen, vorzugsweise Aminen und besonders bevorzugt Alkoholen, beispielsweise Glyzerin, Trimethylolpropan und/oder Pentaerythrit, insbesondere deren Alkoxylierungsprodukte.

Weiterhin können die PUR-Systeme Verstärkungsstoffe (c) in einer Menge von 0 bis 80 Gew.-%, bevorzugt von 1 bis 50 Gew.-%, mehr bevorzugt von 2 bis 30 Gew.-%, bezogen auf das Gewicht der Komponenten a) und b), enthalten, die im Allgemeinen zu einer Verstärkung des PUR-Schaumstoffs und mit zu einer Verbesserung seiner mechanischen Eigenschaften führen. Bevorzugt werden die Verstärkungsstoffe in Form von Fasern und/oder Plättchen eingesetzt. Als Fasern können übliche Mineralfasern, vorzugsweise Glasfasern, oder Kunstfasern, wie beispielsweise Polyamidfasern, Polyesterfasern, Carbonfasern oder Polyurethanfasern sowie beliebige Gemische aller genannten Fasern verwendet werden. Bei den gegebenenfalls verwendeten plättchenförmigen Füllstoffen kann es sich um sogenannte Glassflakes oder mineralische Stoffe wie Mica oder Glimmer handeln.

Als Katalysatoren (d) können übliche Verbindungen eingesetzt werden, welche die Reaktion der Komponente (a) mit der Komponente (b) beschleunigen. In Frage kommen beispielsweise tertiäre Amine und/oder organische Metallverbindungen, insbesondere Zinnverbindungen. Beispielsweise können als Katalysatoren folgende Verbindungen eingesetzt werden: Triethylendiamin, Aminoalkyl- und/oder Aminophenyl-imidazole und/oder Zinn-(II)-Salze von organischen Carbonsäuren. Katalysatoren werden im Allgemeinen in einer Menge von 0,1 bis 5 Gew.-%, bezogen auf das Gewicht der Komponente b), eingesetzt.

Als Treibmittel (e) können allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel sind (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether. Ketone oder Acetate. Die Menge der eingesetzten Treibmittel richtet sich nach der angestrebten Dichte der PUR-Schaumstoffe. Die unterschiedlichen Treibmittel können einzeln oder in beliebigen Mischungen untereinander zum Einsatz kommen. Besonders bevorzugt wird nur Wasser als Treibmittel eingesetzt, im Allgemeinen in einer Menge von 0,1 bis 5 Gew.-%, insbesondere von 0,5 bis 4 Gew.-%, bezogen auf das Gewicht der gesamten Mischung von Verbindungen b).

Die Umsetzung erfolgt gegebenenfalls in Anwesenheit von Hilfs- und/oder Zusatzstoffen (f), wie z.B. Zellreglern, Zellöffnern, oberflächenaktiven Verbindungen und/oder Stabilisatoren gegen oxidativen oder thermischen Abbau oder Alterung.

Als Selbsttrennadditive (g) werden
A) Polykondensate aus Carbonsäuren mit einer Kettenlänge von 8 bis 40 Kohlenstoffatomen, gegebenenfalls in Abmischung mit Dicarbonsäuren und mehrwertigen Alkoholen,
B) gegebenenfalls Carbonsäuren mit einer Kettenlänge von 8 bis 40 Kohlenstoffatomen,
C) gegebenenfalls Ammoniumsalzen aus Carbonsäuren mit einer Kettenlänge von 8 bis 40 Kohlenstoffatomen und Diaminen mit mindestens einer primären Aminogruppe und mindestens einer tertiären Aminogruppe
eingesetzt.

Die separat vor Eintrag des PUR-Systems oder mit Eintrag des PUR-Systems (in situ) in das Modulwerkzeug applizierten Verstärkungsstoffe können aus Endlosglasfaser- oder Schnittglasfasermatten, Glasfaservliesen, Glasfasergeweben, Naturfasermatten sowie aus den von Naturfaser- bzw. Glasfaserrovings geschnittenen Langfasern bestehen. Bei den Naturfaserverstärkungen handelt es sich beispielsweise um Flachs-, Jute-, Hanf- oder Sisalfasem. Die separat eingebrachten Fasermatten werden nach dem bekannten S-RIM-Verfahren und die insitu aus den Rovings geschnittenen Langfasern mit Längen zwischen 12,5 bis 100 mm nach dem Long-Fiber-PUR(LFI/PUR)-Injection-Verfahren verarbeitet.

Die erfindungsgemäße faserverstärkte PUR-Trägerschicht (ii) weist im Allgemeinen eine Dicke von 1 bis 50 mm, bevorzugt von 10 bis 25 mm auf. Die bevorzugte Dichte liegt zwischen 300 und 1400 g/l, besonders bevorzugt im Bereich von 450 bis 900 g/l. Ferner sind die Trägerschichten durch folgende mechanische Eigenschaftswerte gekennzeichnet: Zugfestigkeit nach DIN EN ISO 527 von 10 bis 55 MPa, Zug E-Modul nach DIN EN ISO 527 von 900 bis 5200 MPa , Biege E-Modul nach DIN 53293 von 1200 bis 6200 MPa und Biegefestigkeit nach DIN 53293 von 20 bis 125 MPa.

Die Reaktion des eingebrachten PUR-Systems zu dem erfindungsgemäßen faserverstärkten PUR-Schaumstoff als Trägerschicht (ii) erfolgt im geschlossenen Modulwerkzeug mit einer 5- bis 15-fachen Verdichtung des PUR-Schaumstoffs. Der Verdichtungsfaktor ergibt sich hierbei rechnerisch durch Division der PUR-Dichte im Verbundteil durch die PUR-Dichte im frei aufgeschäumten Schaum.

Nach dem Aushärten des PUR-Schaumstoffs können die erfindungsgemäßen Verbundbauteile der Form entnommen werden.

Die zur Herstellung der Trägerschicht (ii) eingesetzten Mengen an Isocyanat (a) und die gegenüber Isocyanaten reaktiven Verbindungen (b) entsprechen einem Äquivalenzverhältnis von bevorzugt 0,90 bis 1,5 : 1, besonders bevorzugt jedoch von 1 bis 1,2 : 1.

Die üblicherweise bei der Modulteilfertigung eingestellten Modulwerkzeugtemperaturen liegen im Bereich von 30 bis 90°C, vorzugsweise jedoch bei 40 bis 80°C.

Nachstehend wird die Erfindung beispielhaft anhand der Fertigung eines Dachmoduls beschrieben.

### Beispiel Dachmodulherstellung

Als Außenbeschicht (i) wurde eine vorab tiefgezogene und für den Fertigungsprozess vorbehandelte eingefärbte, kratzfeste, chemikalienbeständige thermoplastische Folie der Fa. GE Plastics (Lexan SLX) in die untere Hälfte des geöffneten Modulwerkzeugs eingelegt; wobei dieses Werkzeugunterteil auf ca. 40 bis 45°C beheizt war. Im Werkzeugoberteil wurde ein gegen Durchschäumung gesperrtes Dekor als Innnenschicht (iii) passgenau eingelegt und mittels Spannrahmen und Vakuumtechnik fest angesaugt und danach die Inserts eingebracht. Die Temperatur des Werkzeugoberteils betrug 75 bis 80°C. Der gleichzeitige Eintrag des PUR-Systems und der von Glasfaserrovings geschnittenen Langglasfasern (s. Verfahrensschritt 5.) erfolgte über einen LFI-PUR-Mischkopf der Fa. Krauss-Maffei, wobei die Verteilung des PUR-Faser-Gemisches durch einen Roboters in programmierten Bahnkurven erfolgte. Der Glasfaser gehalt, bezogen auf die PUR-Trägerschicht, betrug 23 Gew.-%,.

Die auf diese Art und Weise hergestellten Verbundbauteile aus den erfindungsgemäß selbsttrennend eingestellten PUR-Schaumstoffen zeigten in den Dekor-freien Bereichen völlig problemloses Entformungsverhalten auch bei Fortlauf der Fertigung, wie in nachstehender Tabelle 1 aufgeführt ist. Das sonst übliche Einttrennen der Werkzeugoberflächen vor jeder Verbundteilherstellung, das ein Anhaften des PUR-Schaumstoffs verhindert und eine problemlose Entformung ermöglicht, entfiel. Nur zu Beginn der Fertigung wurde die Form mit einem handelsüblichen Trennmittel eingesprüht.

Die erfindungsgemäßen Verbundteile zeigten auch nach 25 Entformungen aus dem Werkzeug gutes Trennverhalten sowie auch gleichzeitig gute Haftung zwischen den einzelnen Schichten (i), (ii) und (iii). Des weiteren hatten sie vergleichbares mechanisches Eigenschaftsniveau wie die aus dem Standardmaterial mit externem Trennmittel hergestellten Muster. Auch nach Temperung bei 110°C für 1 Stunde wiesen die erfindungsgemäßen Teile im Vergleich zu den standardmäßig gefertigten aus PUR-Standard-Schaumstoffen optisch keine Unterschiede auf.

**Tabelle 1**

| Aufbau und Verarbeitungsverhalten der erfindungsgemäßen PUR-Systeme (AA, BB, CC) im Vergleich zum PUR Standard-System (Stand der Technik) | | | | | |
|---|---|---|---|---|---|
| PUR-System | | AA | BB | CC | Vergleich |
| Polyetherpolyol 1) | (Gew.Tle.) | 40 | 40 | 40 | 40 |
| Polyetherpolyol 2) | (Gew.Tle.) | 20 | 20 | 20 | 20 |
| Polyetherpolyol 3) | (Gew.Tle.) | 10 | 10 | 10 | 10 |
| Polyetherpolyol 4) | (Gew.Tle.) | 8 | 8 | 8 | 8 |
| Selbsttrennadditiv A) | (Gew.Tle.) | 10 | 5 | 5 | - |
| Selbsttrennadditiv B) | (Gew.Tle.) | - | 5 | - | - |
| Selbsttrennadditiv C) | (Gew.Tle.) | 5 | 5 | - | - |
| Wasser | (Gew.Tle.) | 1,2 | 1,2 | 1,2 | 1,2 |
| Aktivator | (Gew.Tle.) | 0,5 | 0,5 | 0,5 | 0,5 |
| Stabilisator | (Gew.Tle.) | 2,5 | 2,5 | 2,5 | 2,5 |
| Isocyanat 1) | (Gew.Tle.) | 168 | 168 | - | 165 |
| Isocyanat 2) | (Gew.Tle.) | - | - | 188 | - |

| Verarbeitungsverhalten | | | | | |
|---|---|---|---|---|---|
| Trennmitteleinsatz | | 1 x zu | 1 x zu | 1 x zu | bei jedem Verbundteil |
| (Typ Acmos 35-4181) | | Beginn der | Beginn der | Beginn der | |
| | | Fertigung- | Fertigung- | Fertigung- | |
| Entformungen | | >25 | >25 | >25 | 1x |
| Trennverhalten | | gut | gut | gut | gut |
| Haftung zwischen den Verbundschichten | | gut | gut | gut | gut |

### Beschreibung der Rohstoffe

Selbsttrennadditiv A): OH-Zahl = 54,3 mg KOH/g, Säure-Zahl = 22,5 mg KOH/g
Selbsttrennadditiv B): OH-Zahl = 56 mg KOH/g
Selbsttrennadditiv C): Aminzahl = 82 mg KOH/g
Polyetherpolyol 1): OH-Zahl = 1010 mg KOH/g,
Polyetherpolyol 2): OH-Zahl = 450 mg KOH/g
Polyetherpolyol 3): OH-Zahl = 620 mg KOH/g
Polyetherpolyol 4): OH-Zahl = 28 mg KOH/g
Isocyanat 1): 4, 4'-MDI mit höherfunktionellen Isomeren, NCO-Gehalt = 31,5 Gew.-%
Isocyanat 2): Mit Selbsttrennadditiv C) modifiziertes Isocyanat 1), NCO-Gehalt = 28 Gew.-%

## Patentansprüche

1. Verbundelemente, aufgebaut aus einer Aussenschicht (i) aus thermoplastischem Kunststoff oder Metall, einer Trägerschicht (ii) aus verstärktem PUR-Material und gegebenenfalls einer dekorativen Innenschicht (iii), wobei Haftung zwischen den Schichten (i), (ii) und gegebenenfalls (iii) vorliegt, **dadurch gekennzeichnet, dass** das verstärkte PUR-Material interne Selbsttrennadditive aus
A) Polykondensaten aus Carbonsäuren mit einer Kettenlänge von 8 bis 40 Kohlenstoffatomen, gegebenenfalls in Abmischung mit Dicarbonsäuren und mehrwertigen Alkoholen,
B) gegebenenfalls Carbonsäuren mit einer Kettenlänge von 8 bis 40 Kohlenstoffatomen,
C) gegebenenfalls Ammoniumsalzen aus Carbonsäuren mit einer Kettenlänge von 8 bis 40 Kohlenstoffatomen und Diaminen mit mindestens einer primären Aminogruppe und mindestens einer tertiären Aminogruppe
enthält.

2. Verfahren zur Herstellung von Verbundelementen gemäß Anspruch 1, umfassend die Schritte
1. Einbringen der Außenschicht (i) in die Unterschale einer Form,
2. gegebenenfalls Einbringen eines Dekormaterials als Innenschicht (iii) in die Oberschale der Form,
3. gegebenenfalls Aufbringen einer Fasermattenverstärkung auf die Außenschicht (i) oder gegebenenfalls in die Oberschale der Form,
4. Auftragen des PUR-Materials auf die Außenschicht (i) bzw. auf die Fasermattenverstärkung,
wobei dieses Material die PUR-Komponenten
a) Polyisocyanat,
b) gegenüber Isocyanat reaktiven Verbindungen,
c) gegebenenfalls Verstärkungsstoffe,
d) Katalysatoren,
e) Treibmittel,
f) gegebenenfalls Zusatzstoffe und/oder Hilfsmittel und
g) Selbsttrennadditive,
bestehend aus
A) Polykondensaten aus Carbonsäuren mit einer Kettenlänge von 8 bis 40 Kohlenstoffatomen, gegebenenfalls in Abmischung mit Dicarbonsäuren und mehrwertigen Alkoholen,
B) gegebenenfalls Carbonsäuren mit einer Kettenlänge von 8 bis 40 Kohlenstoffatomen,
C) gegebenenfalls Ammoniumsalzen aus Carbonsäuren mit einer Kettenlänge von 8 bis 40 Kohlenstoffatomen und Diaminen mit mindestens einer primären Aminogruppe und mindestens einer tertiären Aminogruppe
enthält,
oder
5. gleichzeitiges Aufbringen von Verstärkungsstoffen und PUR-Material auf die Außenschicht (i), alternativ zu Schritt 4.,
6. Ausreagieren des PUR-Materials in der Form,
7. Entnahme des PUR-Verbundelementes aus der Form,
8. gegebenenfalls Aufbringen eines Dekormaterials (iii) auf die Seite des PUR-Verbundelementes, die der Seite, auf der sich die Außenschicht (i) befindet, gegenüberliegt, alternativ zu Schritt 2..

3. Verwendung der Verbundelemente gemäß Anspruch 1 als Karosseriebauteile für Kraftfahrzeuge, insbesondere für Dächer, Hardtops, Türen, Motorhauben, Kofferraumdeckel, Heckklappen und Stoßfänger.

## Claims

1. Composite elements, constructed from an outer layer (i) consisting of thermoplastics or metal, a supporting layer (ii) comprising reinforced PU material and optionally a decorative inner layer (iii), there being adhesion between layers (i), (ii) and optionally (iii), **characterised in that** the reinforced PU material contains internal in-mould release additives comprising
A) polycondensates of carboxylic acids having a chain length of 8 to 40 carbon atoms, optionally mixed with dicarboxylic acids and polyhydric alcohols,
B) optionally carboxylic acids having a chain length of 8 to 40 carbon atoms,
C) optionally ammonium salts of carboxylic acids having a chain length of 8 to 40 carbon atoms and diamines having at least one primary amino group and at least one tertiary amino group.

2. Process for producing composite elements according to claim 1, comprising the following steps:
1. introduction of the outer layer (i) into the bottom shell of a mould,
2. optionally introduction of a decor material as inner layer (iii) into the top shell of the mould,
3. optionally application of a fibre mat reinforcement onto the outer layer (i) or optionally into the top shell of the mould,
4. application of the PU material onto the outer layer (i) or onto the fibre mat reinforcement,
this material containing the PU components
a) polyisocyanate,
b) isocyanate-reactive compounds,
c) optionally reinforcing materials,
d) catalysts
e) blowing agents,
f) optionally additives and/or auxiliary substances and
g) in-mould release additives,
consisting of
A) polycondensates of carboxylic acids having a chain length of 8 to 40 carbon atoms, optionally mixed with dicarboxylic acids and polyhydric alcohols,
B) optionally carboxylic acids having a chain length of 8 to 40 carbon atoms,
C) optionally ammonium salts of carboxylic acids having a chain length of 8 to 40 carbon atoms and diamines having at least one primary amino group and at least one tertiary amino group,
or
5. simultaneous application of reinforcing materials and PU material onto the outer layer (i), as an alternative to step 4.,
6. reaction of the PU material in the mould,
7. removal of the PU composite element from the mould,
8. optionally application of a decor material (iii) onto the opposite side of the PU composite element from the side having the outer layer (i), as an alternative to step 2.

3. Use of the composite elements according to claim 1 as body components for motor vehicles, in particular for roofs, hardtops, doors, bonnets, boot lids, tailgates and bumpers.

## Revendications

1. Eléments composites constitués d'une couche extérieure (i) en résine synthétique thermoplastique ou en métal, d'une couche de support (ii) en matériau de PUR renforcé et le cas échéant d'une couche intérieure décorative (iii) avec une bonne adhérence entre les couches (i), (ii) et le cas échéant (iii), **caractérisés en ce que** le matériau de PUR renforcé contient des additifs pour auto-démoulage consistant eux-mêmes en
A) des polycondensats d'acides carboxyliques à une longueur de chaîne de 8 à 40 atomes de carbone, le cas échéant en mélange avec des acides dicarboxyliques et des alcools polyvalents,
B) le cas échéant des acides carboxyliques à une longueur de chaîne de 8 à 40 atomes de carbone,
C) le cas échéant des sels d'ammonium d'acides carboxyliques à une longueur de chaîne de 8 à 40 atomes de carbone et de diamines à au moins un groupe amino primaire et au moins un groupe amino tertiaire.

2. Procédé pour la préparation des éléments composites selon la revendication 1, comprenant les stades opératoires suivants :
1. introduction de la couche extérieure (i) dans la coquille inférieure d'un moule,
2. le cas échéant introduction d'un matériau décoratif en couche intérieure (iii) dans la coquille supérieure du moule,
3. le cas échéant application d'un renforcement par mattes de fibres sur la couche extérieure (i) ou le cas échéant dans la coquille supérieure du moule,
4. application du matériau de PUR sur la couche extérieure (i) et respectivement sur le renforcement par mattes de fibres, ce matériau contenant en tant que composants de PUR :
a) un polyisocyanate,
b) des composés réactifs avec l'isocyanate,
c) le cas échéant des matières renforçantes,
d) des catalyseurs,
e) des agents porogènes,
f) le cas échéant des additifs et/ou produits auxiliaires et
g) des additifs pour auto-démoulage,
consistant eux-mêmes en
A) des polycondensats d'acides carboxyliques à une longueur de chaîne de 8 à 40 atomes de carbone, le cas échéant en mélange avec des acides dicarboxyliques et des alcools polyvalents,
B) le cas échéant des acides carboxyliques à une longueur de chaîne de 8 à 40 atomes de carbone,
C) le cas échéant des sels d'ammonium d'acides carboxyliques à une longueur de chaîne de 8 à 40 atomes de carbone et de diamines à au moins un groupe amino primaire et au moins un groupe amino tertiaire,
ou bien
5. application simultanée des matières renforçantes et du matériau de PUR sur la couche extérieure (i), en variante du stade 4,
6. réaction complète du matériau de PUR dans le moule,
7. évacuation de l'élément composite de PUR du moule,
8. le cas échéant application d'un matériau de décor (iii) sur la face de l'élément composite de PUR opposée à celle qui porte la couche extérieure (i), en variante du stade opératoire 2.

3. Utilisation des éléments composites selon la revendication 1 en tant que pièce de construction de carrosserie pour véhicules, en particulier pour les toits, les hardtops, les portes, les capots de moteurs, les capots de coffre, les portes de hayons et les pare-chocs.
